# EUROPEAN PATENT SPECIFICATION

(11) **EP 4 524 352 B1**
(45) Date of publication and mention of the grant of the patent: **04.02.2026**
(21) Application number: 24198192.7
(22) Date of filing: 03.09.2024
(51) Int. Cl.: E05F 1/12, E05F 3/20, E05F 3/14, G06F 1/16

(54) **ADJUSTABLE DAMPED HINGE MECHANISM**
EINSTELLBARER GEDÄMPFTER SCHARNIERMECHANISMUS
MÉCANISME DE CHARNIÈRE RÉGLABLE ET AMORTIE

(30) Priority: 14.09.2023 US 202363538421 P
(43) Date of publication of application: 19.03.2025
(73) Proprietor: United Parcel Service Of America, Inc., Atlanta, GA 30328 (US)
(72) Inventor: NGUYEN, Edward Pham, Atlanta, GA (US); BELL, Julian Leland, Atlanta, GA (US)
(74) Representative: Zacco Sweden AB

(56) References cited:
- EP-A1- 3 670 802
- WO-A1-2023/031172
- TW-A- 201 207 258
- US-A1- 2024 426 156

## Description

### TECHNICAL FIELD

The present disclosure generally relates to hinge mechanisms, and more particularly to a hinge mechanism that is adjustable and provides damping for motion control.

### BACKGROUND

Cameras are often used for surveillance purposes. For example, in the package carrier industry, cameras are used at dock bays for observing the loading and unloading of delivery vehicles. These cameras are generally placed at the "corners" of a bay door to keep them out of the way from being hit and damaged during the loading and/or uploading of the delivery vehicles. However, such a configuration does not provide an optimal observational view of the loading and unloading of the vehicles. A better position is to hang a camera at the middle of the bay door, but this position can place the camera in a location that is susceptible to damage by being hit by parcels that are being loaded and/or unloaded.

A solution is to hang the camera in a manner that allows the camera to swing out of the way if hit by a parcel without causing damage to the camera. For example, attaching the camera to some type of hinge so that the camera, when hit by a parcel, will then swing in an upward direction and out of the way of the parcel so that the parcel may safely travel under the camera without damaging it. However, conventional hinges provide disadvantages for this particular use. Firstly, conventional hinges do not provide for a controlled motion of the camera when swinging out of the way, which can lead to the camera being damaged by hitting other objects such as the roof of the dock. This problem can be more predominate with hinges that provide multiple pivot points. Secondly, conventional hinges do not provide for adequate slowing down and/or damping of the swinging of the camera. This can create a problem with returning the camera, after being hit and swinging out of the way, to a neutral and/or resting position that provides for an optimal observational view of the loading and/or unloading of the delivery vehicles. Thus, a need exists in the industry for an improved hinge mechanism that allows for motion control and damping capabilities.

WO 2023/031172 discloses a hydraulically damped hinge for a closure system having a closure member and a support.

EP 3 670 802 relates to a hinge adapted to interconnect first and second objects. The hinge comprises a leaf unit, two action units and an axle unit.

### SUMMARY

This summary is intended to introduce a selection of concepts in a simplified form that is further described below in the detailed description section of this disclosure. This summary is not intended to identify key or essential features of the claimed subject matter, nor is it intended to be used as an aid in isolation to determine the scope of the claimed subject matter.

Various aspects of the disclosure are directed to a bidirectional hinge mechanism that comprises a collar; a rotatable assembly comprising a saddle, a shaft, a first torsion spring, a first tensioner, and a first rotary speed limiter. In particular embodiments, the rotatable assembly provides a single point of a rotation of the saddle in a first direction and a second direction from a neutral position of the saddle. In particular embodiments, the saddle comprises a first pin and/or is attached to the shaft and rotates about in the first direction and the second direction. In particular embodiments, the first torsion spring comprises a first end attached to the collar. In particular embodiments, the first tensioner is attached to a second end of the first torsion spring and comprises a second pin for winding the first torsion spring when engaged by the first pin during the rotation of the saddle in the first direction. In particular embodiments, the first rotary speed limiter dampens the rotation of the saddle. In particular embodiments, the bidirectional hinge mechanism further comprises a hinge base attached to the collar and comprises a third pin that acts as a stop for the second pin when the saddle is in the neutral position to prevent the first torsion spring from unwinding, wherein the first pin is uninhibited during the rotation of the saddle in the second direction.

In some embodiments, the saddle comprises a fourth pin, the rotatable assembly further comprises a second torsion spring attached to the collar at a first end of the second torsion spring; and a second tensioner attached to a second end of the second torsion spring and comprises a fifth pin for winding the second torsion spring when engaged by the fourth pin during the rotation of the saddle in the second direction, and the hinge base comprises a sixth pin that acts as a stop for the fifth pin when the saddle is in the neutral position to prevent the second torsion spring from unwinding, wherein the fourth pin is uninhibited during the rotation of the saddle in the first direction. In some embodiments, the first rotary speed limiter dampens the rotation of the saddle in the first direction, and the rotatable assembly further comprises a second rotary speed limiter that dampens the rotation of the saddle in the second direction.

In some embodiments, the saddle is attached to a first object and the hinge base is attached to a second object that is stationary to facilitate the first object being capable of rotating in the first direction and the second direction relative to the second object. In some embodiments, the saddle comprises one or more mounting components for mounting an object to the saddle.

In some embodiments, the hinge base comprises a structure that comprises one or more mounting components for mounting the hinge base to an object. In some embodiments, the hinge base comprises a plurality of pin placements for the third pin to adjust the neutral position of the saddle with respect to the hinge base. In some embodiments, the first tensioner comprises a plurality of pin placements for the second pin to adjust an amount of winding of the first torsion spring when engaged by the first pin during the rotation of the saddle in the first direction.

In some embodiments, the hinge base comprises: a structure that comprises one or more mounting components for mounting the hinge base to an object; a first arm having a first end extending from the structure; a second arm having a first end extending from the structure; and a housing for the rotatable assembly that extends between a second end of the first arm and a second end of the second arm. In some embodiments, the housing is tubular in shape and at least a portion of each of the collar and the first tensioner comprises a diameter to fit within an interior of the housing.

Additional aspects of the disclosure are directed to a bidirectional hinge mechanism comprising a rotatable assembly and a hinge base assembly. In particular embodiments, the rotatable assembly comprises: a saddle comprising a first pin; a rotary speed limiter for damping a rotation of the saddle; and a shaft to which the saddle attaches and provides a single point of the rotation of the saddle in a first direction and a second direction from a neutral position of the saddle. In particular embodiments, the hinge base assembly is for supporting the shaft, and comprises: a first hinge base housing; a first hinge base arm attached to a first end of the first hinge base housing; a second hinge base housing; a second hinge base arm attached to a first end of the second hinge base housing; a collar coupling a second end of the first hinge base housing to a second end of the second hinge base housing; a first torsion spring attached to the collar at a first end of the first torsion spring; a first tensioner attached to a second end of the first torsion spring and comprising a second pin for winding the first torsion spring when engaged by the first pin during the rotation of the saddle in the first direction; and a third pin that acts as a stop for the second pin when the saddle is in the neutral position to prevent the first torsion spring from unwinding, wherein the first pin is uninhibited during the rotation of the saddle in the second direction. In some embodiments, the third pin is attached to the first hinge base arm.

In some embodiments, the saddle comprises a fourth pin and the hinge base assembly comprises: a second torsion spring attached to the collar at a first end; a second tensioner attached to a second end of the second torsion spring and comprising a fifth pin for winding the second torsion spring when engaged by the fourth pin during the rotation of the saddle in the second direction; and a sixth pin that acts as a stop for the fifth pin when the saddle is in the neutral position to prevent the second torsion spring from unwinding, wherein the fourth pin is uninhibited during the rotation of the saddle in the first direction. In some embodiments, the sixth pin is attached to the second hinge base arm. In some embodiments, the first tensioner is located at the first end of the first hinge base housing and the second tensioner is located at the first end of the second hinge base housing.

In some embodiments, the first hinge base housing comprises a first mounting plate that extends from the first hinge base housing and comprises one or more first mounting components for mounting the hinge base assembly to an object and the second hinge base housing comprises a second mounting plate that extends from the second hinge base housing and comprises one or more second mounting components for mounting the hinge base assembly to the object. In some embodiments, the saddle is attached to a first object and the hinge base assembly is attached to a second object that is stationary to facilitate the first object being capable of rotating in the first direction and the second direction relative to the second object. In some embodiments, the saddle comprises one or more mounting components for mounting an object to the saddle. In some embodiments, the hinge base assembly comprises a plurality of pin placements for the third pin to adjust the neutral position of the saddle with respect to the hinge base assembly. In some embodiments, the first tensioner comprises a plurality of pin placements for the second pin to adjust an amount of winding of the first torsion spring when engaged by the first pin during the rotation of the saddle in the first direction.

### BRIEF DESCRIPTION OF THE DRAWINGS

The components in the drawings are not necessarily drawn to scale, the emphasis instead being placed upon clearly illustrating various aspects of the present disclosure. Like reference numbers designate corresponding parts throughout the figures, wherein:
FIG. 1 provides a perspective view of an assembled hinge mechanism in accordance with various embodiments of the present disclosure;
FIG. 2 provides an exploded view of a hinge mechanism in accordance with various embodiments of the present disclosure;
FIG. 3 provides a cutaway view of an assembled hinge mechanism in accordance with various embodiments of the present disclosure;
FIG. 4 provides a cutaway view of a rotatable assembly and collar mounted in a hinge base in accordance with various embodiments of the present disclosure;
FIG. 5 provides a perspective view of a rotatable assembly and collar in accordance with various embodiments of the present disclosure;
FIG. 6 provides a perspective view of a torsion spring used in accordance with various embodiments of the present disclosure;
FIGS. 7A-C provide illustrations demonstrating a rotation of a hinge mechanism in accordance with various embodiments of the present disclosure;
FIG. 8 provides an illustration demonstrating pin positions for a hinge mechanism in a neutral or resting position in accordance with various embodiments of the present disclosure;
FIG. 9 provides an illustration demonstrating pin positions for a side of a rotatable assembly in a tension state in accordance with various embodiments of the present disclosure;
FIG. 10 provides an illustration demonstrating pin positions for a side of a rotatable assembly in a free state in accordance with various embodiments of the present disclosure;
FIG. 11 provides a perspective view of a hinge base in accordance with various embodiments of the present disclosure;
FIG. 12 provides a perspective view of a collar in accordance with various embodiments of the present disclosure;
FIG. 13 provides a perspective view of a tensioner in accordance with various embodiments of the present disclosure;
FIG. 14 provides a perspective view of a saddle in accordance with various embodiments of the present disclosure;
FIG. 15 provides a perspective view of an assembled second hinge mechanism in accordance with various embodiments of the present disclosure;
FIG. 16 provides a cutaway view of an assembled second hinge mechanism in accordance with various embodiments of the present disclosure;
FIG. 17 provides a cutaway view of a hinge base assembly and a tensioner in accordance with various embodiments of the present disclosure;
FIG. 18 provides a second cutaway view of a hinge base assembly and a tensioner in accordance with various embodiments of the present disclosure; and
FIG. 19 provides a perspective view of a back of a hinge base assembly in accordance with various embodiments of the present disclosure.

### DETAILED DESCRIPTION

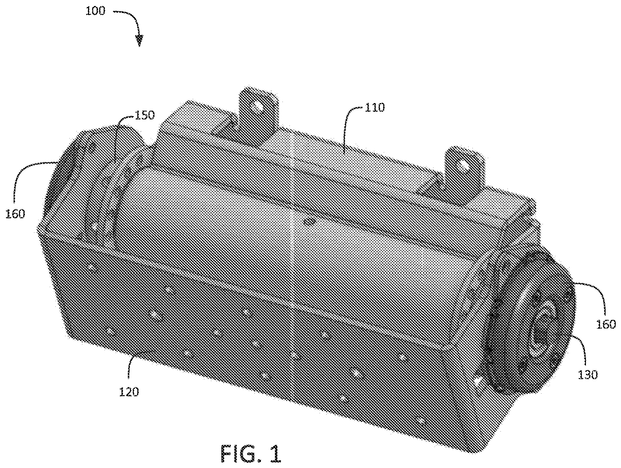

This detailed description is provided in order to meet statutory requirements. However, this description is not intended to limit the scope of the disclosure. Turning to FIG. 1, a perspective view of an assembled hinge mechanism 100 according to various embodiments is provided. The hinge mechanism 100 includes a hinge base 110, a collar (not pictured), and a rotatable assembly that includes a saddle 120, a shaft 130, two tensioners 150, and two rotary speed limiters 160. The saddle 120 is used for attaching (e.g., mounting) an object to the hinge mechanism 100 for the purpose of providing a manner for allowing the object to rotate about the hinge mechanism 100. For example, a camera may be attached to the saddle 120 for the purpose of hanging the camera at the middle of a bay door from a frame of the bay door to allow for the camera to rotate (e.g., swing) about a primary mounting axis of the hinge mechanism 100, or an axis offset to the primary mounting axis, when hit by a parcel being loaded into or unloaded from a delivery vehicle. Accordingly, the saddle 120 may be of various shapes and/or sizes to accommodate different objects that may be attached to the saddle 120. For example, as shown in FIG. 1, the saddle 120 may be in a U-shape to provide a flat surface to accommodate attaching (e.g., mounting) the camera to the hinge mechanism 100, as well as two arms 123 that are attached to the shaft 130 of the hinge mechanism 100 so that the saddle 120 may rotate (e.g., swing) in concert with the shaft 130.

Further, the two rotary speed limiters 160 control the speed at which the saddle 120, and corresponding object attached thereto, rotates about the hinge mechanism 100. Specifically, the rotary speed limiters 160 in various embodiments provide a damping effect to control the rotation of the saddle 120. For example, the rotary speed limiters 160 may comprise a chamber having a liquid such as oil or grease that produces a damping torque on the movement of the shaft 130 as the saddle 120 rotates in concert with the shaft 130.

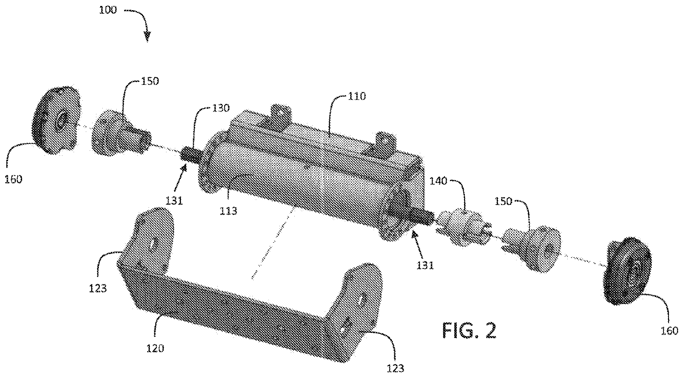

FIG. 2 provides an exploded view of the hinge mechanism 100 according to various embodiments. As shown in more detail, the shaft 130 is cylindrical in shape, and may be solid or hollow. The shaft 130 and collar 140 are located (e.g., placed) in a housing 113 of the hinge base 110. The arms 123 of the saddle 120 and rotary speed limiters 160 are fitted over (e.g., attached to) distal ends 131 of the shaft 130 so that they may rotate in concert with the shaft 130.

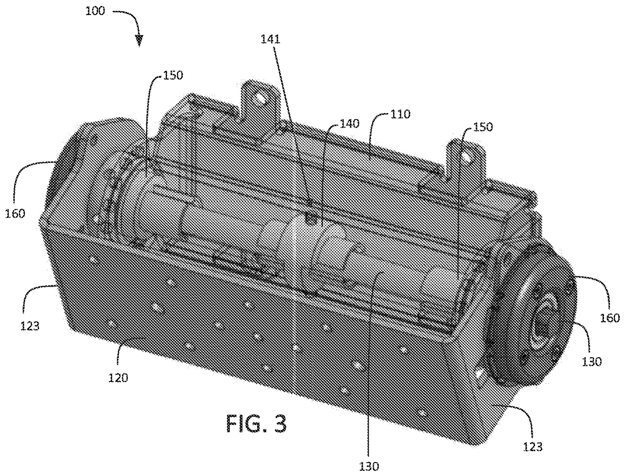

Turning to FIG. 3, a cutaway view of the assembled hinge mechanism 100 is provided to further demonstrate the configuration of the rotatable assembly and collar 140 according to various embodiments. In particular embodiments, the collar 140 is placed at approximately a center position along the body of the shaft 130 and allows for the shaft 130 to pass through the collar 140. The collar 140 may provide various types of mechanisms 141 to attach the collar 140 to the housing 113 of the hinge base 110. For example, the mechanisms 141 may comprise one or more holes mated with one or more pins (screws) to attach the collar 140 to the housing 113 and allow the shaft 130 to rotate freely within the housing 113 without being inhibited by the collar 140.

In addition, each of the tensioners 150 is located at a distal end 131 of the shaft 130 with the shaft extended through the tensioner 150 and a corresponding rotary speed limiter 160. Each rotary speed limiter 160 is affixed to the shaft 130 and the saddle 120 to facilitate the saddle 120, the shaft, the tensioners 150, and the rotary speed limiters 160 rotating in concert. A "rotation" of the saddle 120 about the hinge mechanism 100 does not necessarily involve the saddle 120 turning three hundred and sixty degrees around the primary mounted axis, or an axis offset to the primary mounted axis, of the hinge mechanism 100, but may instead involve turning less than three hundred and sixty degrees around the primary mounted axis, or an axis offset to the primary mounted axis.

In addition, the rotatable assembly may be configured so that the saddle 120 can directionally rotate around the primary mounted axis, or an axis offset to the primary mounted axis. For example, a "rotation" about the hinge mechanism 100 may involve the saddle 120 turning one hundred and twenty degrees in a first direction around the primary mounted axis, or an axis offset to the primary mounted axis, of the hinge mechanism 100, and then turning one hundred and twenty degrees in a second (e.g., opposite) direction around the primary mounted axis, or an axis offset to the primary mounted axis, of the hinge mechanism 100 in a "swinging" (bidirectional) fashion.

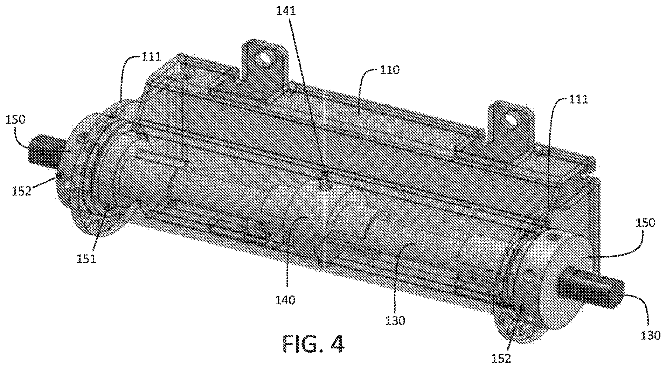

FIG. 4 provides a further cutaway view of the rotatable assembly and collar 140 mounted in the hinge base 110. A first element 151 of each tensioner 150 comprises a diameter that extends into the housing 113 of the hinge base 110 and fits snuggly within an interior diameter of the housing 113 to support the shaft 130 and tensioner 150 rotating. Further, at least a portion of a second element 152 of each tensioner 150 comprises a diameter that allows the portion to extend into a lip formed by the housing 113 sitting again an opening of an arm 111 of the hinge base 110 and fits snuggly within an interior diameter of the opening to further support the shaft 130 and tensioner 150 rotating.

It may be desirable in certain applications to have an object attached to the saddle 120 of the rotatable assembly be positioned in a neutral or resting position when not actively rotating about the shaft 130 of the rotatable assembly. For example, it may be desirable to have a camera attached to the saddle 120 and to hang the hinge mechanism 100 from a frame of a bay door so that the camera hangs from the frame in a neutral or resting position when not actively rotating about the shaft 130, to provide an optimal observational view of the loading and unloading of delivery vehicles at the bay door. In addition, it may be desirable to have the object and/or saddle 120 return to the neutral or resting position after the object and/or saddle 120 have rotated about the shaft 130.

In various embodiments, the rotatable assembly comprises one or more torsion springs to facilitate the object and/or saddle 120 returning to a neutral or resting position after the object and/or saddle 120 have rotated about the hinge mechanism 100. For example, in particular embodiments, the rotatable assembly comprises two torsion springs to facilitate the object and/or saddle 120 returning to a neutral or resting position after the object and/or saddle 120 have rotated about the hinge mechanism 100 in a first direction and a second (opposite) direction in a "swinging" (bidirectional) fashion.

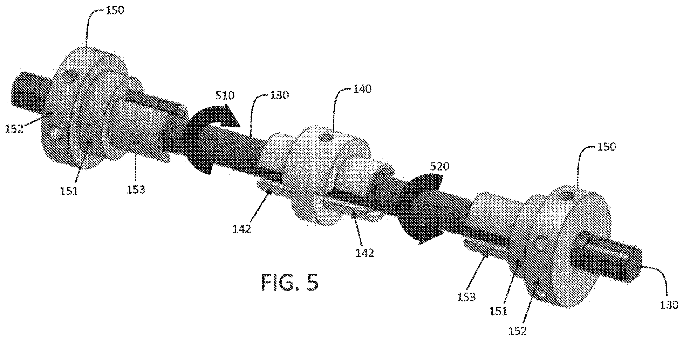

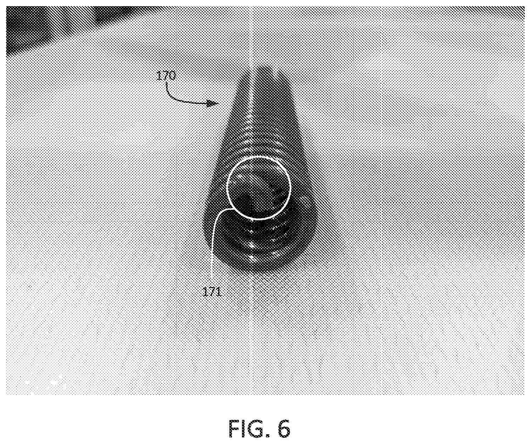

Turning to FIG. 5, a perspective view of the rotatable assembly and collar 140 is shown with the collar 140 comprising outer elements 142 configured to secure (e.g., anchor) a first end of each of two torsion springs (not pictured in FIG. 5) that are placed around the shaft 130 on opposites sides of the collar 140. An example of a torsion spring 170 is provided in FIG. 6 in which a retention tang 171 at a first end of the torsion spring 170 may be used in securing the first end of the torsion spring 170 to the outer element 142 of the collar 140. The two torsion springs 170 may be secured to the collar 140 so that they wind in opposite directions when looking at the face of one of the tensioners 150. That is to say, the first torsion spring 170 is secured to the collar 140 so that the torsion spring 170 winds in a clockwise direction 510 and the second torsion spring 170 is secured to the collar 140 so that the torsion spring 170 winds in a counterclockwise direction 520 when looking at the face of one of the tensioners 150.

Likewise, each of the tensioners 150 comprises a third element 153 that is configured to secure a second end of a corresponding torsion spring 170 so that the tensioner 150 can wind the torsion spring 170 as the tensioner 150 rotates in the applicable direction. Again, the corresponding torsion spring 170 may have a retention tang 171 at the second end of the torsion spring 170 that may be used in securing the second end to the third element 153 of the tensioner 150.

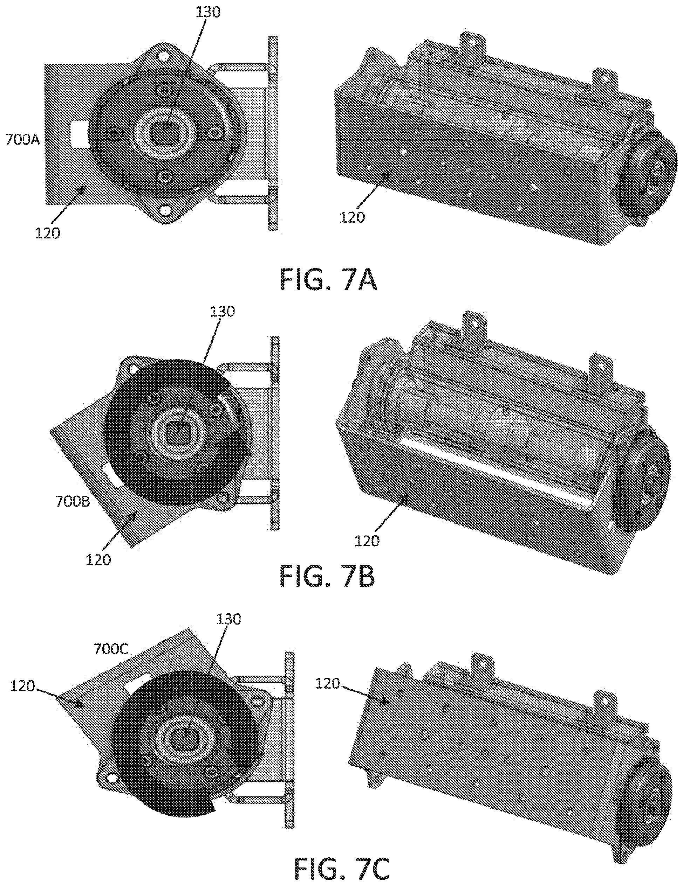

FIGS. 7A-C demonstrate a rotation of the rotatable assembly using a two torsion spring configuration. FIG. 7A displays a side view of the hinge mechanism 100 with the saddle 120 of the rotatable assembly sitting in a neutral or resting position 700A. A force may be applied to the saddle 120 (e.g., an object attached to the saddle 120) that causes the saddle 120 to rotate in a first (e.g., counterclockwise) direction 700B about the shaft 130 as shown in FIG. 7B. The rotation of the saddle 120 in the counterclockwise direction 700B causes the tensioner 150 located on a first distal end of the shaft 130 to wind a first of the torsion springs 170, causing a first side of the rotatable assembly to be in a "tension" state. While the rotation of the saddle 120 in the counterclockwise direction 700B does not cause the tensioner 150 located on the second distal end of the shaft 130 to wind the second of the torsion springs 170, leaving the second side of the rotatable assembly in a "free" state.

Once the force is no longer being exerted on the saddle 120, the wound torsion spring 170 will have a tendency to unwind and cause the saddle 120 to rotate in a second (e.g., clockwise, opposite) direction 700C about the shaft as shown in FIG. 7C. The rotation of the saddle 120 in the clockwise direction 700C causes the tensioner 150 located on the second distal end of the shaft 130 to wind the second torsion spring 170, causing the second side of the rotatable assembly to now be in a tension state. While the rotation of the saddle in the clockwise direction 700C causes an unwinding of the first torsion spring 170, leaving the first side of the rotatable assembly now in a free state. This bidirectional rotation (e.g., swinging) of the saddle 120 about the shaft 130 continues as the rotary speed limiter 160 located at each distal end of the shaft 130 dampens the rotation of the saddle 120 and the saddle 120 returns to the neutral or resting position 700A. For example, the first rotary speed limiter 160 located at the first distal end of the shaft 130 may dampen the rotation of the first side of the rotatable assembly in the first (counterclockwise) direction and the second rotary speed limiter 160 located at the second distal end of the shaft 130 may dampen the rotation of the second side of the rotatable assembly in the second (clockwise) direction.

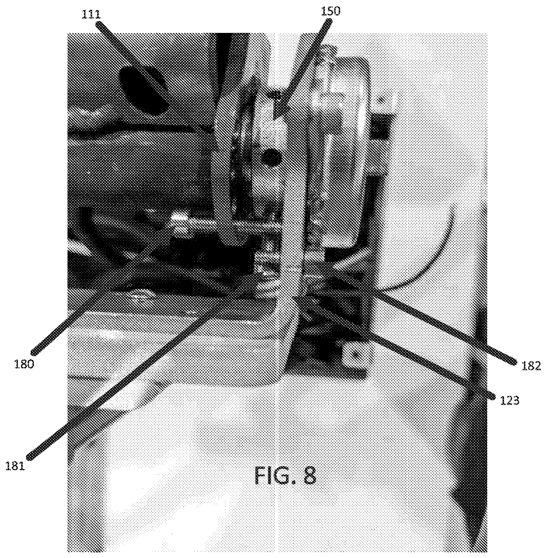

In various embodiments, a combination of pins is used in establishing the neutral or resting position of the saddle 120, as well as assisting the tensioners 150 in winding the torsion springs 170. Turning to FIG. 8, one side of the hinge mechanism 100 is provided that demonstrates the positions of the pins for establishing the neutral or resting position 700A of the saddle 120. The combination of pins includes a first pin 180 connected to the arm 111 of the hinge base 110, a second pin 181 connected to the second element 152 of the tensioner 150, and a third pin 182 connected to the arm 123 of the saddle 120. For example, the pins 180, 181, 182 may be threaded and screwed into threaded holes provided in the arm 111 of the hinge base 110, the second element of the tensioner 150, and the arm 123 of the saddle 120 to "connect" the pins 180, 181, 182 to the arm 111 of the hinge base 110, the second element of the tensioner 150, and the arm 123 of the saddle 120.

In establishing the neutral or resting position, the first pin 180 connected to the arm 111 of the hinge base 110 generates tension in the corresponding torsion spring 170 by acting as a stop for the second pin 181 placed in the second element 152 of the tensioner 150 and preventing the torsion spring 170 from (further) unwinding. The second pin 181 resting against the first pin 180 establishes the neutral or resting position of the saddle 120. In addition, the third pin 182 connected to the arm 123 of the saddle 120 rests on the second pin 181 connected to the second element 152 of the tensioner 150.

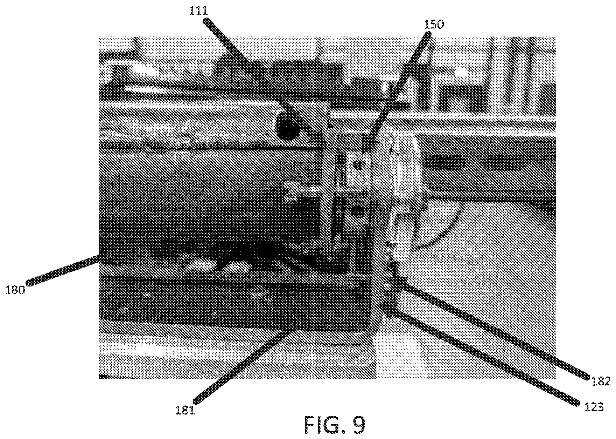

FIG. 9 demonstrates the positions of the pins 180, 181, 182 when a force is applied to the saddle 120 and the saddle 120 is rotated in a counterclockwise direction 700B about the shaft 130. The rotation of the saddle 120 in the counterclockwise direction 700B causes the third pin 182 connected to the arm 123 of the saddle 120 to apply force to the second pin 181 connected to the second element 152 of the tensioner 150 and wind up the corresponding torsion spring 170 to cause a first side of the rotatable assembly to be in a tension state. The first pin 180 connected to the arm 111 of the hinge base 110 is inactive.

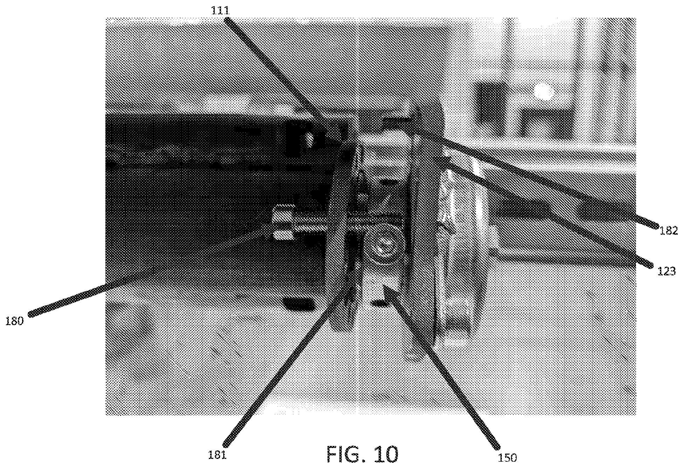

As the force being applied to the saddle 120 is removed (e.g., the force is no longer being exerted on the saddle 120), the torsion spring 170 has a tendency to unwind, causing the saddle 120 to begin to rotate in a clockwise direction 700C about the shaft 130. The saddle 120 passes through the neutral or resting position 700A and continues to rotate in a clockwise direction 700C about the shaft 130. FIG. 10 demonstrates the positions of the pins 180, 181, 182 as the saddle continues to rotate in the clockwise direction 700C, resulting in the first side of the rotatable assembly to be in a free state.

The first pin 180 connected to the arm 111 of the hinge base 110 acts as a stop for the second pin 181 connected to the second element 152 of the tensioner 150 to prevent further unwinding of the torsion spring 170. In addition, the third pin 182 connected to the arm 123 of the saddle 120 is free to continue rotating clockwise while the torsion spring 170 for the opposite side of the hinge mechanism 100 is being wound.

In various embodiments, the combination of pins and torsion spring configuration is mirrored on the opposite side of the hinge mechanism 100. In application, while one side of the rotatable assembly is in a free state, the other side of the rotatable assembly is in a tension state, resulting in a bidirectional rotation (e.g., swinging) of the saddle 120 about the shaft 130. This bidirectional rotation continues as the rotary speed limiter 160 located at each distal end of the shaft 130 dampens the rotation of the saddle 120 in the corresponding direction until the saddle 120 returns to the neutral or resting position 700A.

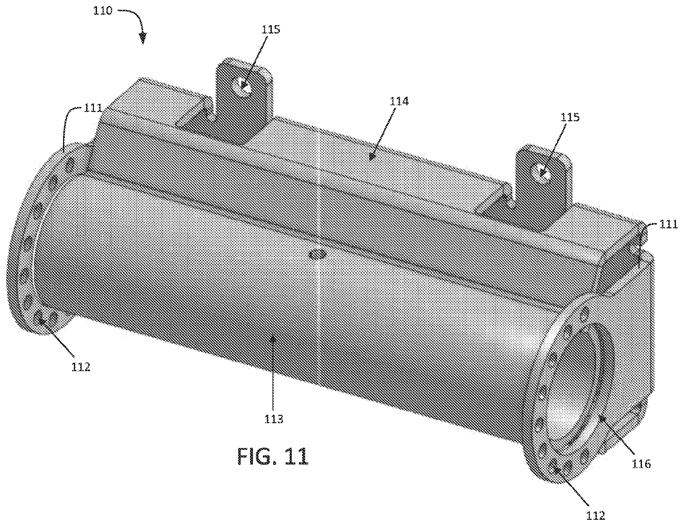

FIG. 11 provides a perspective view of a hinge base 110 according to various embodiments. The hinge base 110 includes a support structure 114 and a housing 113 for the rotatable assembly. The support structure 114 provides support for the housing 113 in the form of two arms 111 that support each end of the housing 113. In addition, the support structure 114 provides a framework for attaching (e.g., mounting) the hinge mechanism 100 to an object. For example, the support structure 114 may include a back plate with one or more mounting holes 115 that can be used in mounting the hinge mechanism 100 to the object. Further, the support structure 114 may include one or more additional plates to provide further support for the housing 113.

As previously discussed, the housing 113 is used for the rotatable assembly in which components of the assembly, such as a portion of the shaft 130, the torsion springs 170, and portions of the tensioners 150, along with the collar 140, are housed within an interior of the housing 113. In FIG. 11, the housing 113 is in the shape of a cylinder, barrel, and/or the like with a circular circumference. However, in other embodiments, the housing 113 may be other shapes such as, for example, a rectangular exterior with an interior having a circular circumference to accommodate the rotation of the shaft 130 and tensioners 150.

The two arms 111 of the hinge base 110 may have openings to allow for the rotatable assembly (portions thereof) and the collar 140 to be housed within the housing 113. In particular embodiments, the diameter of each of the openings for the arms 111 is larger than the diameter of the interior of the housing 113 to provide a lip 116 that comprises a thickness of the arm 111 in which a portion of the second element 152 of the tensioner 150 can sit to support the tensioner 150. Further, one or more mechanisms 112 (e.g., holes, divots, tabs, ramps, and/or the like) may be provided around an exterior of the circumference of the opening to facilitate attaching the first pin 180 to the arm. The set of mechanisms 112 may be provided to allow for moving the first pin 180 around the exterior of the circumference of the opening to set (e.g., adjust) the neutral or resting position of the saddle 120, as well as the amount of tension in the corresponding torsion spring 170 when the saddle 120 is in the neutral or resting position. This capability may allow for the saddle 120 to rotate around an axis at different offsets from the primary mounting axis for the hinge mechanism 100 once mounted to an object.

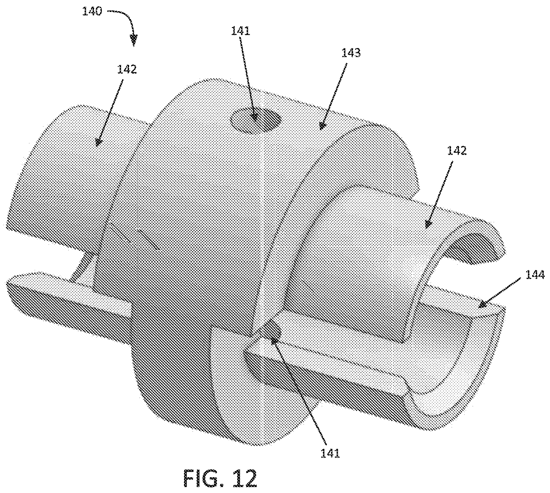

FIG. 12 provides a perspective view of a collar 140 according to various embodiments. The collar 140 includes a center element 143 and two outer elements 142 on opposite sides of the center element 143. As previously noted, the collar 140 allows for the shaft 130 to pass through the collar 140. In addition, the collar 140 may provide various types of mechanisms 141 to attach the collar 140 to the housing 113 of the hinge base 110 such as, for example, one or more threaded holes mated with one or more pins (screws), to attach the collar 140 to the housing and allow the shaft 130 to rotate freely within the housing 113 without being inhibited by the collar 140. Each of the outer elements 142 of the collar 140 may be designed to allow for a retention tang 171 of a torsion spring 170 to be attached (e.g., anchored) to the outer element 142. For example, the outer element 142 may include one or more slits that provide edges 144 to which the retention tang 171 can be attached to anchor the torsion spring 170 to the collar 140.

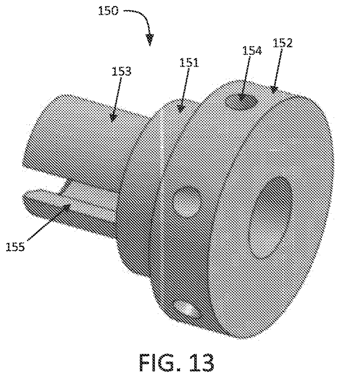

FIG. 13 provides a perspective view of a tensioner 150 according to various embodiments. As previously noted, the tensioner 150 can include a first element 151, a second element 152, and a third element 153. As previously discussed, the first element 151 comprises a diameter that extends into the housing 113 of the hinge base 110 and fits snuggly within an interior diameter of the housing 113 to support the shaft 130 and tensioner 150 rotating. The second element 152 comprises a diameter to allow at least a portion of the second element 152 to extend into the lip 116 formed by the housing 113 sitting again an opening of an arm 111 of the hinge base 110 and fits snuggly within an interior diameter of the opening to further support the shaft 130 and tensioner 150 rotating.

In addition, the second element 152 may comprise one or more mechanisms 154 (e.g., holes, divots, tabs, ramps, and/or the like) provided around the exterior circumference of the second element 152. The set of mechanisms 154 may be provided to allow for moving the second pin 181 to different positions around the exterior circumference of the second element 152 to set (e.g., adjust) the rate at which the tensioner 150 winds the corresponding torsion spring 170 when a force is exerted against the saddle 120 in the appropriate direction. More specifically, the set of mechanisms 154 may provide for better motion control of the hinge mechanism 100 by allowing the second pin 181 to be moved from a first mechanism 154 to a second mechanism 154, along with setting the position of the first pin 180, to regulate the rate (e.g., amount) at which the tensioner 150 winds the corresponding torsion spring 170.

The third element 153 of the tensioner 150 may be designed to allow for a retention tang 171 of a torsion spring 170 to be attached (e.g., anchored) to the tensioner 150 so that the tensioner 150 can wind the torsion spring 170 as the tensioner 150 rotates in the applicable direction. For example, like the outer element 142 of the collar 140, the third element 153 may include one or more slits that provide edges 155 to which the retention tang 171 can be attached to anchor the torsion spring 170 to the tensioner 150.

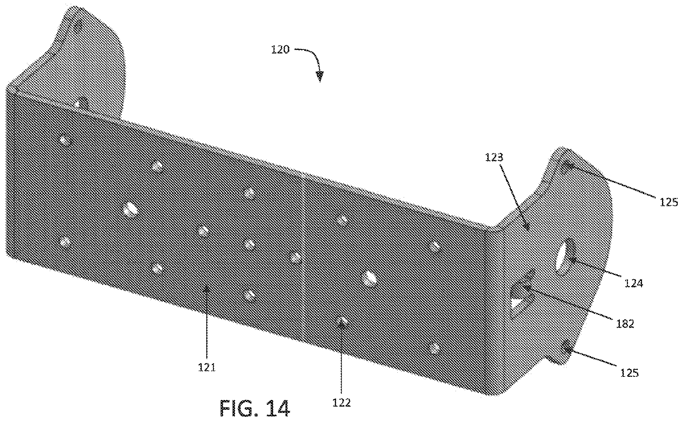

FIG. 14 provides a perspective view of a saddle 120 according to various embodiments. The saddle 120 shown in FIG. 14 includes a bottom plate 121 and arms 123 extending from each end of the bottom plate 121. The bottom plate 121 is essentially flat in FIG. 14 to facilitate attaching an object to the saddle 120. However, the bottom plate 121 may be configured according to various shapes to accommodate objects of different shapes and sizes. For example, the bottom plate 121 may be configured in the shape of a dome so that objects that are spherical, or partially spherical, in shape may be attached to the saddle 120.

In addition, the bottom plate 121 may include one or more mechanisms 122 that facilitate attaching (e.g., mounting) objects to the bottom plate 121. For example, the set of mechanisms 122 may include threaded holes of various shapes and/or sizes that can be mated with corresponding pins (e.g., screws) for attaching an object to the bottom plate 121. In addition, the set of mechanisms 122 may be provided in certain patterns that match up to corresponding mechanisms for the object that are used in attaching the object to the bottom plate 121.

Each of the arms 123 of the saddle 120 includes an opening 124 (e.g., a hole) through which the shaft 130 extends to support the saddle 120 in the rotatable assembly. In addition, each of the arms 123 includes one or more mechanisms 125 to facilitate attaching a rotary speed limiter 160 to the arm 123. For example, the one or more mechanisms 125 may be threaded holes that can be mated with corresponding pins (e.g., screws) for attaching the rotary speed limiter 160 to the arm 123.

Further, each of the arms 123 includes a third pin 182 that assists the tensioner 150 in winding the corresponding torsion spring 170 as previously discussed when a force is exerted on the saddle 120. The configuration of the arm 123 shown in FIG. 14 provides the pin 182 as a tab or ramp that extends inward from an inner surface of the arm 123. However, in particular embodiments, the arm 123 may be configured with one or more mechanisms (e.g., one or more holes and a movable pin) to allow for varying the position of the pin 182 to, along with the first and/or second pins 180, 182, set the neutral or resting position of the saddle 120 and/or control the rotation of the saddle 120.

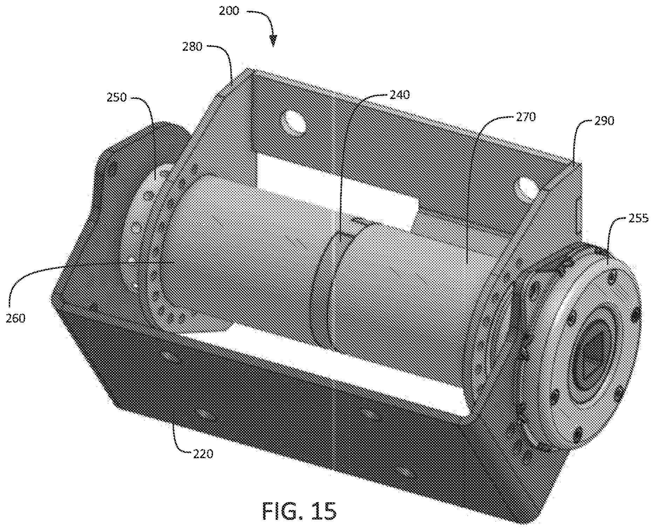

FIG. 15 provides a perspective view of an assembled second hinge mechanism 200 according to various embodiments. The second hinge mechanism 200 includes a hinge base assembly and a rotatable assembly. In various embodiments, the hinge base assembly includes a collar 240, a first hinge base housing 260, a second hinge base housing 270, a first hinge base arm 280, and a second hinge base arm 290.

In particular embodiments, the rotatable assembly includes a shaft (not pictured), a saddle 220, two torsion springs (not pictured), two tensioners 250, and two rotary speed limiters 255 that essentially perform the same operations as the shaft 130, the saddle 120, the two torsion springs 170, the two tensioners 150, and the two rotary speed limiters 160 of the rotatable assembly used with the hinge mechanism 100 previously discussed via FIGS. 1 thru 14.

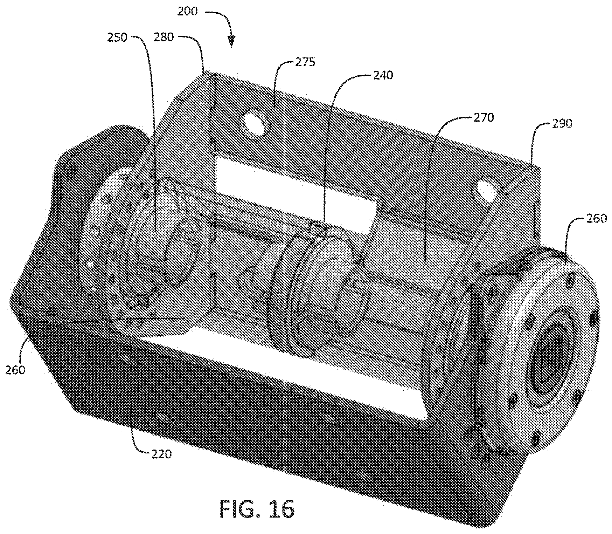

Turning to FIG. 16, a cut away view of the assembled second hinge mechanism 200 according to various embodiments is provided. In various embodiments, each of the two tensioners 250 operations essentially in a similar manner as the two tensioners 150 described for the hinge mechanism 100 previously discussed via FIGS. 1 thru 14. For example, each of the tensioners 250 may include a first element, a second element, and a third element.

The first element comprises a diameter that extends into the corresponding first or second hinge base housing 260, 270 and fits snuggly within an interior diameter of the corresponding housing 260, 270 to support the shaft and tensioner 250 rotating. The second element comprises a diameter to allow at least a portion of the second element to extend into a lip formed by the corresponding housing 260, 270 sitting again an opening of the corresponding hinge base arm 280, 290 and fits snuggly within an interior diameter of the opening to further support the shaft and tensioner 250 rotating. In addition, the second element may comprise one or more mechanisms (e.g., holes, divots, tabs, ramps, and/or the like) provided around the exterior circumference of the second element to allow for moving a pin to different positions around the exterior circumference to set (e.g., adjust) the rate at which the tensioner 250 winds the corresponding torsion spring when a force is exerted against the saddle 220 in the appropriate direction. The third element may be designed to allow for a retention tang of the torsion spring to be attached (e.g., anchored) to the tensioner 250 so that the tensioner 250 can wind the torsion spring. For example, the third element may include one or more slits that provide edges to which the retention tang can be attached to anchor the torsion spring to the tensioner 250.

Likewise, in various embodiments, the collar 240 operations essentially in a similar manner as the collar 140 described for the hinge mechanism 100 previously discussed via FIGS. 1 thru 14. The collar 240 may include a center element and two outer elements on opposite sides of the center element. The collar 240 allows for the shaft to pass through the collar 240. In addition, the collar 240 may provide various types of mechanisms to attach the collar 240 to the first and second hinge base housings 260, 270 and allow the shaft to rotate freely within the two housings 260, 270 without being inhibited by the collar 240. Each of the outer elements of the collar 240 may be designed to allow for a retention tang of a torsion spring to be attached (e.g., anchored) to the outer element. For example, the outer element may include one or more slits that provide edges to which the retention tang can be attached to anchor the torsion spring to the collar 240.

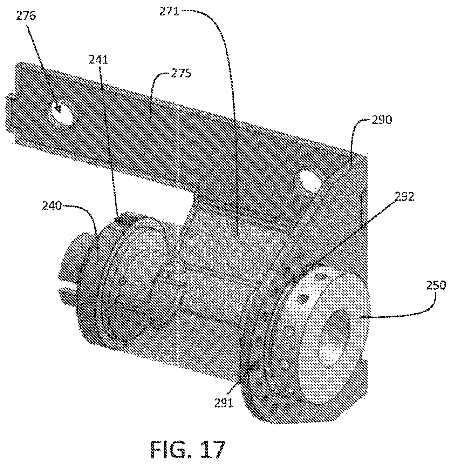

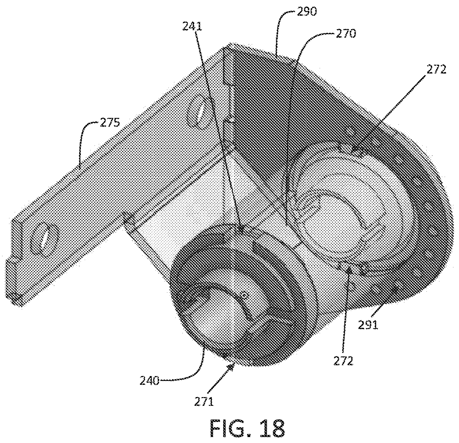

FIGS. 17 and 18 provide cut away views of a portion of the hinge base assembly and a corresponding tensioner 250 according to various embodiments. In particular embodiments, the first and second housings 260, 270 are essentially identical, with the housings 260, 270 positioned in opposite directions about an axis. Each of the housings 260, 270 includes a tab 271 that fits into a cutout 241 of the collar 240 to attached the housing 260, 270 to the collar 240, and corresponding couple the two housings 260, 270 together. In addition, each of the housings 260, 270 includes an extension 271 that connects to a mounting plate 275. The mounting plate 275 includes one or more mechanisms used in attaching (e.g., mounting) the second hinge mechanism 200 to an object. For example, the mounting plate 275 may include one or more mounting holes 276 that can be used in mounting the second hinge mechanism 200 to the object.

In addition, each of the first and second hinge base arms 280, 290 have openings to allow for the rotatable assembly (portions thereof) to be housed within the first and second hinge base housings 260, 270. In particular embodiments, the diameter of each of the openings for the arms 280, 290 is larger than the diameter of the interior of the corresponding housing 260, 270 to provide a lip that comprises a thickness of the arm 280, 290 in which a portion of the second element of the tensioner 250 can sit to support the tensioner 250. Further, one or more mechanisms 791 (e.g., holes, divots, tabs, ramps, and/or the like) may be provided around an exterior of the circumference of the opening to facilitate attaching a pin to the arm 280, 290. The set of mechanisms 791 may be provided to allow for moving the pin around the exterior of the circumference of the opening to set (e.g., adjust) the neutral or resting position of the saddle 220, as well as the amount of tension in the corresponding torsion spring when the saddle 220 is in the neutral or resting position. Further, each of the first and second hinge base arms 280, 290 includes tabs 292 that fit into slots 272 in the corresponding hinge base housing 260, 270 to attach the arm 280, 290 to the housing 260, 270.

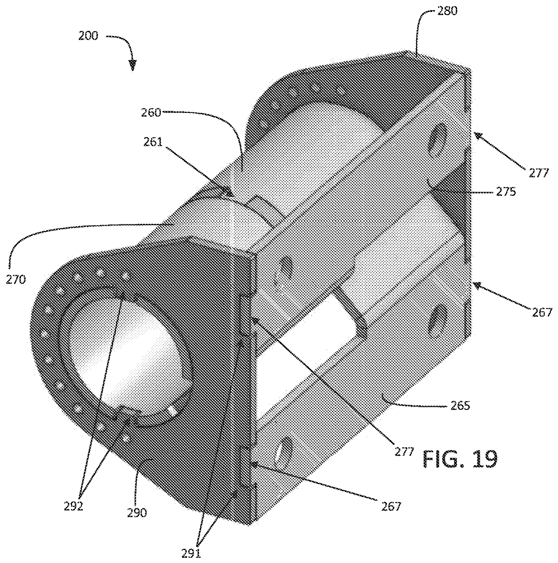

Finally, FIG. 19 provides a perspective view of the back of the hinge base assembly according to various embodiments. Shown in FIG. 19 is a further view of the tabs 292 of the second hinge base arm 290 that fit into the slots 272 of the second hinge base housing 270. In addition, FIG. 19 shows the tab 261 of the hinge base housing 260 that fits into the slot 241 of the collar 240. Further, each of the mounting plates 265, 275 includes tabs 267, 277 that fit into slots 291 of each of the hinge base arms 280, 290 to attach the mounting plate 265, 275 to the hinge base arm 280, 290. As a result, the collar 240, the first hinge housing 260, the second hinge housing 270, the first hinge base arm 280, and the second hinge base arm 290 are coupled together to form the hinge base assembly.

Embodiment 1: A bidirectional hinge mechanism comprising: a collar; a rotatable assembly comprising a saddle, a shaft, a first torsion spring, a first tensioner, and a first rotary speed limiter, wherein: the rotatable assembly provides a single point of a rotation of the saddle in a first direction and a second direction from a neutral position of the saddle, the saddle comprises a first pin, the saddle is attached to the shaft and rotates about in the first direction and the second direction, the first torsion spring comprises a first end attached to the collar, the first tensioner is attached to a second end of the first torsion spring and comprises a second pin for winding the first torsion spring when engaged by the first pin during the rotation of the saddle in the first direction; and the first rotary speed limiter dampens the rotation of the saddle; and a hinge base attached to the collar and comprising a third pin that acts as a stop for the second pin when the saddle is in the neutral position to prevent the first torsion spring from unwinding, wherein the first pin is uninhibited during the rotation of the saddle in the second direction.

Embodiment 2: The bidirectional hinge mechanism of embodiment 1, wherein: the saddle comprises a fourth pin; the rotatable assembly further comprises: a second torsion spring attached to the collar at a first end of the second torsion spring; and a second tensioner attached to a second end of the second torsion spring and comprising a fifth pin for winding the second torsion spring when engaged by the fourth pin during the rotation of the saddle in the second direction; and the hinge base comprises a sixth pin that acts as a stop for the fifth pin when the saddle is in the neutral position to prevent the second torsion spring from unwinding, wherein the fourth pin is uninhibited during the rotation of the saddle in the first direction.

Embodiment 3: The bidirectional hinge mechanism of embodiment 2, wherein the first rotary speed limiter dampens the rotation of the saddle in the first direction, and the rotatable assembly further comprises a second rotary speed limiter that dampens the rotation of the saddle in the second direction.

Embodiment 4: The bidirectional hinge mechanism of embodiments 1, 2, and/or 3, wherein the saddle is attached to a first object and the hinge base is attached to a second object that is stationary to facilitate the first object being capable of rotating in the first direction and the second direction relative to the second object.

Embodiment 5: The bidirectional hinge mechanism of embodiments 1, 2, 3, and/or 4, wherein the hinge base comprises a structure that comprises one or more mounting components for mounting the hinge base to an object.

Embodiment 6: The bidirectional hinge mechanism of embodiments 1, 2, 3, 4, and/or 5, wherein the saddle comprises one or more mounting components for mounting an object to the saddle.

Embodiment 7: The bidirectional hinge mechanism of embodiments 1, 2, 3, 4, 5, and/or 6, wherein the hinge base comprises a plurality of pin placements for the third pin to adjust the neutral position of the saddle with respect to the hinge base.

Embodiment 8: The bidirectional hinge mechanism of embodiments 1, 2, 3, 4, 5, 6, and/or 7, wherein the first tensioner comprises a plurality of pin placements for the second pin to adjust an amount of winding of the first torsion spring when engaged by the first pin during the rotation of the saddle in the first direction.

Embodiment 9: The bidirectional hinge mechanism of embodiments 1, 2, 3, 4, 5, 6, 7, and/or 8, wherein the hinge base comprises: a structure that comprises one or more mounting components for mounting the hinge base to an object; a first arm having a first end extending from the structure; a second arm having a first end extending from the structure; and a housing for the rotatable assembly that extends between a second end of the first arm and a second end of the second arm.

Embodiment 10: The bidirectional hinge mechanism of embodiment 9, wherein the housing is tubular in shape and at least a portion of each of the collar and the first tensioner comprises a diameter to fit within an interior of the housing.

Embodiment 11: A bidirectional hinge mechanism comprising: a rotatable assembly comprising: a saddle comprising a first pin; a rotary speed limiter for damping a rotation of the saddle; and a shaft to which the saddle attaches and provides a single point of the rotation of the saddle in a first direction and a second direction from a neutral position of the saddle; and a hinge base assembly for supporting the shaft, the hinge base assembly comprising: a first hinge base housing; a first hinge base arm attached to a first end of the first hinge base housing; a second hinge base housing; a second hinge base arm attached to a first end of the second hinge base housing; a collar coupling a second end of the first hinge base housing to a second end of the second hinge base housing; a first torsion spring attached to the collar at a first end of the first torsion spring; a first tensioner attached to a second end of the first torsion spring and comprising a second pin for winding the first torsion spring when engaged by the first pin during the rotation of the saddle in the first direction; and a third pin that acts as a stop for the second pin when the saddle is in the neutral position to prevent the first torsion spring from unwinding, wherein the first pin is uninhibited during the rotation of the saddle in the second direction.

Embodiment 12: The bidirectional hinge mechanism of embodiment 11, wherein the third pin is attached to the first hinge base arm.

Embodiment 13: The bidirectional hinge mechanism of embodiments 11 and/or 12, wherein: the saddle comprises a fourth pin; and the hinge base assembly comprises: a second torsion spring attached to the collar at a first end; a second tensioner attached to a second end of the second torsion spring and comprising a fifth pin for winding the second torsion spring when engaged by the fourth pin during the rotation of the saddle in the second direction; and a sixth pin that acts as a stop for the fifth pin when the saddle is in the neutral position to prevent the second torsion spring from unwinding, wherein the fourth pin is uninhibited during the rotation of the saddle in the first direction.

Embodiment 14: The bidirectional hinge mechanism of embodiment 13, wherein the sixth pin is attached to the second hinge base arm.

Embodiment 15: The bidirectional hinge mechanism of embodiments 13 and/or 14, wherein the first tensioner is located at the first end of the first hinge base housing and the second tensioner is located at the first end of the second hinge base housing.

Embodiment 16: The bidirectional hinge mechanism of embodiments 11, 12, 13, 14, and/or 15, wherein: the first hinge base housing comprises a first mounting plate that extends from the first hinge base housing and comprises one or more first mounting components for mounting the hinge base assembly to an object; and the second hinge base housing comprises a second mounting plate that extends from the second hinge base housing and comprises one or more second mounting components for mounting the hinge base assembly to the object.

Embodiment 17: The bidirectional hinge mechanism of embodiments 11, 12, 13, 14, 15, and/or 16, wherein the saddle is attached to a first object and the hinge base assembly is attached to a second object that is stationary to facilitate the first object being capable of rotating in the first direction and the second direction relative to the second object.

Embodiment 18: The bidirectional hinge mechanism of embodiments 11, 12, 13, 14, 15, 16, and/or 17, wherein the saddle comprises one or more mounting components for mounting an object to the saddle.

Embodiment 19: The bidirectional hinge mechanism of embodiments 11, 12, 13, 14, 15, 16, 17, and/or 18, wherein the hinge base assembly comprises a plurality of pin placements for the third pin to adjust the neutral position of the saddle with respect to the hinge base assembly.

Embodiment 20: The bidirectional hinge mechanism of embodiments 11, 12, 13, 14, 15, 16, 17, 18, and/or 19, wherein the first tensioner comprises a plurality of pin placements for the second pin to adjust an amount of winding of the first torsion spring when engaged by the first pin during the rotation of the saddle in the first direction.

### CONCLUSION

While this specification contains many specific aspect details, these should not be construed as limitations on the scope of any invention or of what may be claimed, but rather as descriptions of features that may be specific to particular embodiments of particular inventions. Certain features that are described in this specification in the context of separate embodiments also may be implemented in combination in a single embodiment. Conversely, various features that are described in the context of a single embodiment also may be implemented in multiple embodiments separately or in any suitable sub-combination. Moreover, although features may be described above as acting in certain combinations and even initially claimed as such, one or more features from a claimed combination may in some cases be excised from the combination, and the claimed combination may be a sub-combination or variation of a sub-combination.

Many modifications and other embodiments of the disclosure will come to mind to one skilled in the art to which this disclosure pertains having the benefit of the teachings presented in the foregoing descriptions and the associated drawings. Therefore, it is to be understood that the appended claims define the scope of the protection.

The subject matter of this disclosure has been described in relation to particular embodiments, which are intended in all respects to be illustrative rather than restrictive. Alternative embodiments will become apparent to those of ordinary skill in the art to which the present subject matter pertains without departing from the scope of the claims.

## Claims

1. A bidirectional hinge mechanism comprising:
a collar (140);
a rotatable assembly comprising a saddle (120), a shaft (130), a first torsion spring (170), a first tensioner (150), and a first rotary speed limiter (160), wherein:
the rotatable assembly provides a single point of a rotation of the saddle (120) in a first direction and a second direction from a neutral position of the saddle (120),
the saddle (120) comprises a first pin (182),
the saddle (120) is attached to the shaft (130) and rotates about in the first direction and the second direction,
the first torsion spring (170) comprises a first end attached to the collar (140),
the first tensioner (150) is attached to a second end of the first torsion spring (170) and comprises a second pin (181) for winding the first torsion spring (170) when engaged by the first pin (182) during the rotation of the saddle (120) in the first direction; and
the first rotary speed limiter (160) dampens the rotation of the saddle (120); and
a hinge base (110) attached to the collar (140) and comprising a third pin (180) that acts as a stop for the second pin (181) when the saddle (120) is in the neutral position, wherein the first pin (182) is uninhibited during the rotation of the saddle (120) in the second direction.

2. The bidirectional hinge mechanism of claim 1, wherein:
the saddle (120) comprises a fourth pin (182);
the rotatable assembly further comprises:
a second torsion spring (170) attached to the collar (140) at a first end of the second torsion spring (170); and
a second tensioner (150) attached to a second end of the second torsion spring (170) and comprising a fifth pin (181) for winding the second torsion spring (170) when engaged by the fourth pin (182) during the rotation of the saddle (120) in the second direction; and
the hinge base (110) comprises a sixth pin (180) that acts as a stop for the fifth pin (181) when the saddle (120) is in the neutral position, wherein the fourth pin (182) is uninhibited during the rotation of the saddle (120) in the first direction.

3. The bidirectional hinge mechanism of claim 2, wherein the first rotary speed limiter (160) dampens the rotation of the saddle (120) in the first direction, and the rotatable assembly further comprises a second rotary speed limiter (160) that dampens the rotation of the saddle (120) in the second direction.

4. The bidirectional hinge mechanism of any of claims 1 to 3, wherein the saddle (120) is attached to a first object and the hinge base (110) is attached to a second object that is stationary to facilitate the first object being capable of rotating in the first direction and the second direction relative to the second object.

5. The bidirectional hinge mechanism of any of claims 1 to 4, wherein the hinge base (110) comprises a structure (114) that comprises one or more mounting components (115) for mounting the hinge base (110) to an object.

6. The bidirectional hinge mechanism of any of claims 1 to 5, wherein the saddle (120) comprises one or more mounting components (122) for mounting an object to the saddle.

7. The bidirectional hinge mechanism of any of claims 1 to 6, wherein the hinge base (110) comprises a plurality of pin placements (112) for the third pin (180) to adjust the neutral position of the saddle (120) with respect to the hinge base (110).

8. The bidirectional hinge mechanism of any of claims 1 to 7, wherein the first tensioner (150) comprises a plurality of pin placements (154) for the second pin (181) to adjust an amount of winding of the first torsion spring (170) when engaged by the first pin (182) during the rotation of the saddle (170) in the first direction.

9. The bidirectional hinge mechanism of claim 1, wherein the hinge base (110) comprises:
a structure (114) that comprises one or more mounting components (115) for mounting the hinge base (110) to an object;
a first arm (111) having a first end extending from the structure (114);
a second arm (111) having a first end extending from the structure (114); and
a housing (113) for the rotatable assembly that extends between a second end of the first arm (111) and a second end of the second arm (111).

10. The bidirectional hinge mechanism of claim 9, wherein the housing (113) is tubular in shape and at least a portion of each of the collar (140) and the first tensioner (150) comprises a diameter to fit within an interior of the housing (113).

11. The bidirectional hinge mechanism of claim 10, wherein a diameter of an opening for the first arm (111) is larger than a diameter of the interior of the housing (113) to provide a lip (116) that comprises a thickness of the first arm (111) in which a portion of the first tensioner (150) can sit to support the first tensioner (150).

12. The bidirectional hinge mechanism of claim 10, wherein the collar (140) is configured to allow the shaft (130) to pass through the collar (140) and the collar (140) comprises at least one mechanism (141) to attach the collar (140) to the housing (113) of the hinge base (110) to allow the shaft (130) to rotate freely within the housing (113) without being inhibited by the collar (140).

13. The bidirectional hinge mechanism of any of claims 1 to 12, wherein the collar (140) comprises an outer element (142) that provides an edge (144) to allow for a retention tang (171) of the first torsion spring (170) to be attached to the outer element (142) to anchor the first torsion spring (170) to the collar (140).

14. The bidirectional hinge mechanism of any of claims 1 to 13, wherein the first tensioner (150) comprises an element (153) having an edge (155) to allow for a second retention tang (171) of the first torsion spring (170) to be attached to the first tensioner (150) so that the first tensioner (150) can wind the first torsion spring (170) as the first tensioner (150) rotates in the first direction.

15. The bidirectional hinge mechanism of any of claims 1 to 14, wherein the saddle (120) comprises a bottom plate (121) and arms (123) extending from each end of the bottom plate (121), each of the arms (123) comprises an opening (124) through which the shaft (130) extends to support the saddle (120) in the rotatable assembly.

## Patentansprüche

1. Bidirektionaler Scharniermechanismus, der umfasst:
einen Kragen (140);
eine drehbare Baugruppe, die einen Sattel (120), eine Welle (130), eine erste Torsionsfeder (170), ein erstes Spannelement (150) und einen ersten Drehzahlbegrenzer (160) umfasst, wobei:
die drehbare Baugruppe einen einzelnen Drehpunkt des Sattels (120) in einer ersten Richtung und einer zweiten Richtung von einer neutralen Position des Sattels (120) bereitstellt,
der Sattel (120) einen ersten Stift (182) umfasst,
der Sattel (120) an der Welle (130) angebracht ist und sich herum in die erste Richtung und die zweite Richtung dreht,
die erste Torsionsfeder (170) ein erstes Ende umfasst, das an dem Kragen (140) angebracht ist,
das erste Spannelement (150) an einem zweiten Ende der ersten Torsionsfeder (170) angebracht ist und einen zweiten Stift (181) zum Aufwickeln der ersten Torsionsfeder (170) umfasst, wenn in Eingriff mit dem ersten Stift (182), während der Drehung des Sattels (120) in der ersten Richtung; und
der erste Drehzahlbegrenzer (160) die Drehung des Sattels (120) dämpft; und eine Scharnierbasis (110), die an dem Kragen (140) angebracht ist und einen dritten Stift (180) umfasst, der als Anschlag für den zweiten Stift (181) agiert, wenn der Sattel (120) in der neutralen Position ist, wobei der erste Stift (182) während der Drehung des Sattels (120) in der zweiten Richtung ungehemmt ist.

2. Bidirektionaler Scharniermechanismus nach Anspruch 1, wobei:
der Sattel (120) einen vierten Stift (182) umfasst;
wobei die drehbare Baugruppe ferner umfasst:
eine zweite Torsionsfeder (170), die an dem Kragen (140) an einem ersten Ende der zweiten Torsionsfeder (170) angebracht ist; und
ein zweites Spannelement (150), das an einem zweiten Ende der zweiten Torsionsfeder (170) angebracht ist und einen fünften Stift (181) zum Aufwickeln der zweiten Torsionsfeder (170) umfasst, wenn in Eingriff mit dem vierten Stift (182), während der Drehung des Sattels (120) in der zweiten Richtung; und
die Scharnierbasis (110) einen sechsten Stift (180) umfasst, der als Anschlag für den fünften Stift (181) fungiert, wenn der Sattel (120) in der neutralen Position ist, wobei der vierte Stift (182) während der Drehung des Sattels (120) in der ersten Richtung ungehemmt ist.

3. Bidirektionaler Scharniermechanismus nach Anspruch 2, wobei der erste Drehzahlbegrenzer (160) die Drehung des Sattels (120) in der ersten Richtung dämpft und die drehbare Baugruppe ferner einen zweiten Drehzahlbegrenzer (160) umfasst, der die Drehung des Sattels (120) in der zweiten Richtung dämpft.

4. Bidirektionaler Scharniermechanismus nach einem der Ansprüche 1 bis 3, wobei der
Sattel (120) an einem ersten Objekt angebracht ist und die Scharnierbasis (110) an einem zweiten Objekt angebracht ist, das ortsfest ist, um zu erleichtern, dass das erste Objekt in der Lage ist, in der ersten Richtung und der zweiten Richtung relativ zu dem zweiten Objekt zu drehen.

5. Bidirektionaler Scharniermechanismus nach einem der Ansprüche 1 bis 4, wobei die
Scharnierbasis (110) eine Struktur (114) umfasst, die eine oder mehrere Befestigungskomponenten (115) zum Befestigen der Scharnierbasis (110) an einem Objekt umfasst.

6. Bidirektionaler Scharniermechanismus nach einem der Ansprüche 1 bis 5, wobei der
Sattel (120) eine oder mehrere Befestigungskomponenten (122) zum Befestigen eines Objekts an dem Sattel umfasst.

7. Bidirektionaler Scharniermechanismus nach einem der Ansprüche 1 bis 6, wobei die Scharnierbasis (110) eine Mehrzahl von Stiftplatzierungen (112) für den dritten Stift (180) umfasst, um die neutrale Position des Sattels (120) in Bezug auf die Scharnierbasis (110) anzupassen.

8. Bidirektionaler Scharniermechanismus nach einem der Ansprüche 1 bis 7, wobei das erste Spannelement (150) eine Mehrzahl von Stiftplatzierungen (154) für den zweiten Stift (181) umfasst, um einen Betrag der Wicklung der ersten Torsionsfeder (170), wenn in Eingriff durch den ersten Stift (182), während der Drehung des Sattels (170) in der ersten Richtung anzupassen.

9. Bidirektionaler Scharniermechanismus nach Anspruch 1, wobei die Scharnierbasis (110) umfasst:
eine Struktur (114), die eine oder mehrere Befestigungskomponenten (115) zum Befestigen der Scharnierbasis (110) an einem Objekt umfasst;
einen ersten Arm (111) mit einem ersten Ende, das sich von der Struktur (114) erstreckt;
einen zweiten Arm (111) mit einem ersten Ende, das sich von der Struktur (114) erstreckt; und
ein Gehäuse (113) für die drehbare Baugruppe, die sich zwischen einem zweiten Ende des ersten Arms (111) und einem zweiten Ende des zweiten Arms (111) erstreckt.

10. Bidirektionaler Scharniermechanismus nach Anspruch 9, wobei das Gehäuse (113) rohrförmig ausgebildet ist und zumindest ein Abschnitt jedes des Kragen (140) und des ersten Spannelements (150) einen Durchmesser umfasst, um innerhalb eines Innenraums des Gehäuses (113) zu passen.

11. Bidirektionaler Scharniermechanismus nach Anspruch 10, wobei ein Durchmesser einer Öffnung für den ersten Arm (111) größer als ein Durchmesser des Innenraums des Gehäuses (113) ist, um eine Lippe (116) bereitzustellen, die eine Dicke des ersten Arms (111) umfasst, in der ein Abschnitt des ersten Spannelements (150) aufliegen kann, um das erste Spannelement (150) zu stützen.

12. Bidirektionaler Scharniermechanismus nach Anspruch 10, wobei der Kragen (140) dazu konfiguriert ist, zu ermöglichen, dass die Welle (130) durch den Kragen (140) passt, und wobei der Kragen (140) zumindest einen Mechanismus (141) umfasst, um den Kragen (140) an dem Gehäuse (113) der Scharnierbasis (110) anzubringen, um zu ermöglichen, dass sich die Welle (130) innerhalb des Gehäuses (113) frei dreht, ohne durch den Kragen (140) gehemmt zu werden.

13. Bidirektionaler Scharniermechanismus nach einem der Ansprüche 1 bis 12, wobei der Kragen (140) ein äußeres Element (142) umfasst, das eine Kante (144) bereitstellt, um zu ermöglichen, dass ein Halteelement (171) der ersten Torsionsfeder (170) an dem äußeren Element (142) angebracht wird, um die erste Torsionsfeder (170) an dem Kragen (140) zu verankern.

14. Bidirektionaler Scharniermechanismus nach einem der Ansprüche 1 bis 13, wobei das erste Spannelement (150) ein Element (153) mit einer Kante (155) umfasst, um zu ermöglichen, dass ein zweites Halteelement (171) der ersten Torsionsfeder (170) an dem ersten Spannelement (150) angebracht wird, so dass das erste Spannelement (150) die erste Torsionsfeder (170) aufwickeln kann, während sich das erste Spannelement (150) in der ersten Richtung dreht.

15. Bidirektionaler Scharniermechanismus nach einem der Ansprüche 1 bis 14, wobei der Sattel (120) eine Bodenplatte (121) und Arme (123) umfasst, die sich von jedem Ende der Bodenplatte (121) erstrecken, wobei jeder der Arme (123) eine Öffnung (124) umfasst, durch die sich die Welle (130) erstreckt, um den Sattel (120) in der drehbaren Baugruppe zu stützen.

## Revendications

1. Mécanisme de charnière bidirectionnelle comprenant:
un collier (140);
un ensemble rotatif comprenant une selle (120), un arbre (130), un premier ressort de torsion (170), un premier tendeur (150) et un premier limiteur de vitesse de rotation (160), dans lequel:
l'ensemble rotatif fournit un point unique de rotation de la selle (120) dans une première direction et une deuxième direction à partir d'une position neutre de la selle (120),
la selle (120) comprend un premier axe (182),
la selle (120) est fixée à l'arbre (130) et tourne dans la première direction et la deuxième direction,
le premier ressort de torsion (170) comprend une première extrémité fixée au collier (140),
le premier tendeur (150) est fixé à une deuxième extrémité du premier ressort de torsion (170) et comprend un deuxième axe (181) pour enrouler le premier ressort de torsion (170) lorsqu'il est engagé par le premier axe (182) pendant la rotation de la selle (120) dans la première direction; et
le premier limiteur de vitesse de rotation (160) amortit la rotation de la selle (120); et
une base de charnière (110) fixée au collier (140) et comprenant un troisième axe (180) qui sert de butée au deuxième axe (181) lorsque la selle (120) est en position neutre, le premier axe (182) étant débloqué pendant la rotation de la selle (120) dans la deuxième direction.

2. Mécanisme de charnière bidirectionnelle selon la revendication 1, dans lequel:
la selle (120) comprend un quatrième axe (182);
l'ensemble rotatif comprend en outre:
un deuxième ressort de torsion (170) fixé au collier (140) à une première extrémité du deuxième ressort de torsion (170); et
un deuxième tendeur (150) fixé à une deuxième extrémité du deuxième ressort de torsion (170) et comprenant un cinquième axe (181) pour enrouler le deuxième ressort de torsion (170) lorsqu'il est engagé par le quatrième axe (182) pendant la rotation de la selle (120) dans la deuxième direction; et
la base de charnière (110) comprend un sixième axe (180) qui agit comme butée pour le cinquième axe (181) lorsque la selle (120) est en position neutre, le quatrième axe (182) étant débloqué pendant la rotation de la selle (120) dans la première direction.

3. Mécanisme de charnière bidirectionnelle selon la revendication 2, dans lequel le premier limiteur de vitesse de rotation (160) amortit la rotation de la selle (120) dans la première direction, et l'ensemble rotatif comprend en outre un deuxième limiteur de vitesse de rotation (160) qui amortit la rotation de la selle (120) dans la deuxième direction.

4. Mécanisme de charnière bidirectionnelle selon l'une quelconque des revendications 1 à 3, dans lequel la selle (120) est fixée à un premier objet et la base de charnière (110) est fixée à un deuxième objet qui est stationnaire pour faciliter la rotation du premier objet dans la première direction et la deuxième direction par rapport au deuxième objet.

5. Mécanisme de charnière bidirectionnelle selon l'une quelconque des revendications 1 à 4, dans lequel la base de charnière (110) comprend une structure (114) qui comprend un ou plusieurs composants de montage (115) pour monter la base de charnière (110) sur un objet.

6. Mécanisme de charnière bidirectionnelle selon l'une quelconque des revendications 1 à 5, dans lequel la selle (120) comprend un ou plusieurs composants de montage (122) pour monter un objet sur la selle.

7. Mécanisme de charnière bidirectionnelle selon l'une quelconque des revendications 1 à 6, dans lequel la base de charnière (110) comprend une pluralité d'emplacements d'axe (112) pour le troisième axe (180) pour ajuster la position neutre de la selle (120) par rapport à la base de charnière (110).

8. Mécanisme de charnière bidirectionnelle selon l'une quelconque des revendications 1 à 7, dans lequel le premier tendeur (150) comprend une pluralité d'emplacements d'axe (154) pour le deuxième axe (181) pour ajuster une quantité d'enroulement du premier ressort de torsion (170) lorsqu'il est engagé par le premier axe (182) pendant la rotation de la selle (170) dans la première direction.

9. Mécanisme de charnière bidirectionnelle selon la revendication 1, dans lequel la base de charnière (110) comprend :
une structure (114) qui comprend un ou plusieurs composants de montage (115) pour monter la base de charnière (110) sur un objet ;
un premier bras (111) ayant une première extrémité s'étendant à partir de la structure (114) ;
un deuxième bras (111) ayant une première extrémité s'étendant à partir de la structure (114) ; et
un boîtier (113) pour l'ensemble rotatif qui s'étend entre une deuxième extrémité du premier bras (111) et une deuxième extrémité du deuxième bras (111).

10. Mécanisme de charnière bidirectionnelle selon la revendication 9, dans lequel le boîtier (113) est de forme tubulaire et au moins une partie de chacun du collier (140) et du premier tendeur (150) comprend un diamètre pour s'adapter à l'intérieur du boîtier (113).

11. Mécanisme de charnière bidirectionnelle selon la revendication 10, dans lequel un diamètre d'une ouverture pour le premier bras (111) est plus grand qu'un diamètre de l'intérieur du boîtier (113) pour fournir une lèvre (116) qui comprend une épaisseur du premier bras (111) dans laquelle une partie du premier tendeur (150) peut s'asseoir pour supporter le premier tendeur (150).

12. Mécanisme de charnière bidirectionnelle selon la revendication 10, dans lequel le collier (140) est configuré pour permettre à l'arbre (130) de passer à travers le collier (140) et le collier (140) comprend au moins un mécanisme (141) pour fixer le collier (140) au boîtier (113) de la base de charnière (110) pour permettre à l'arbre (130) de tourner librement à l'intérieur du boîtier (113) sans être empêché par le collier (140).

13. Mécanisme de charnière bidirectionnelle selon l'une quelconque des revendications 1 à 12, dans lequel le collier (140) comprend un élément extérieur (142) qui fournit un bord (144) pour permettre à une languette de retenue (171) du premier ressort de torsion (170) d'être fixée à l'élément extérieur (142) pour ancrer le premier ressort de torsion (170) au collier (140).

14. Mécanisme de charnière bidirectionnelle selon l'une quelconque des revendications 1 à 13, dans lequel le premier tendeur (150) comprend un élément (153) ayant un bord (155) pour permettre à une deuxième languette de retenue (171) du premier ressort de torsion (170) d'être fixée au premier tendeur (150) de sorte que le premier tendeur (150) puisse enrouler le premier ressort de torsion (170) lorsque le premier tendeur (150) tourne dans la première direction.

15. Mécanisme de charnière bidirectionnelle selon l'une quelconque des revendications 1 à 14, dans lequel la selle (120) comprend une plaque inférieure (121) et des bras (123) s'étendant à partir de chaque extrémité de la plaque inférieure (121), chacun des bras (123) comprend une ouverture (124) à travers laquelle l'arbre (130) s'étend pour supporter la selle (120) dans l'ensemble rotatif.
